**Europäisches Patentamt**

(19) **European Patent Office**

**Office européen des brevets**

(11) Veröffentlichungsnummer: **0 057 758**
**B1**

(12) **EUROPÄISCHE PATENTSCHRIFT**

(45) Veröffentlichungstag der Patentschrift:
12.06.85

(51) Int. Cl.⁴: **H 04 Q 11/04**

(21) Anmeldenummer: **81108929.1**

(22) Anmeldetag: **26.10.81**

(54) Schaltungsanordnung für Fernmeldevermittlungsanlagen, insbesondere PCM-Fernsprechvermittlungsanlagen, mit einer Zeitmultiplexkoppelanordnung mit Zeitlagenvielfachen.

(30) Priorität: 05.02.81 DE 3104002

(43) Veröffentlichungstag der Anmeldung:
18.08.82 Patentblatt 82/33

(45) Bekanntmachung des Hinweises auf die Patenterteilung:
12.06.85 Patentblatt 85/24

(84) Benannte Vertragsstaaten:
AT CH FR GB IT LI NL SE

(73) Patentinhaber: Siemens Aktiengesellschaft, Berlin und München Wittelsbacherplatz 2, D-8000 München 2 (DE)

(72) Erfinder: Troost, Marcel Abraham, Dipl.-Ing., Gabriele-Münter-Strasse 25, D-8000 München 71 (DE)

(56) Entgegenhaltungen:
EP - A - 0 006 133
EP - A - 0 012 135
DE - A - 2 148 994
DE - A - 2 836 695
GB - A - 1 238 021

SYSTEMS TECHNOLOGY, Heft 32, September 1979, Seiten 5-19; Liverpool, G.B. A.S. PHILIP: "The system X digital switching subsystem (DSS)"
INTERNATIONAL SWITCHING SYMPOSIUM, 25.-29. Oktober 1976, Seiten 411.1.1 - 411.1.8, Kyoto, JP. H. FUKINUKI et al.: "Structure of time division switching networks"
INTERNATIONAL SWITCHING SYMPOSIUM, 25.-29. Oktober1976, Seiten 142.3.1 - 142.3.6, Kyoto, JP. A.S. PHILIP: "A multipurpose digital switching subsystem"

(56) Entgegenhaltungen: (Fortsetzung)
REVIEW OF THE ELECTRICAL COMMUNICATION LABORATORY, Band 16, Nr. 3,4, Marz-April 1968, Seiten 265-284, Tokyo, JP. K. HABARA et al.: "Speech-path network of DEX-T1 switching system"
INTERNATIONAL SWITCHING SYMPOSIUM, 7.-11. Mai 1979, Seiten 405-412, Paris, FR. S. ANDRESEN: "Une nouvelle structure STS"

## Beschreibung

Die Erfindung betrifft eine Schaltungsanordnung für Zeitmultiplex-Fernmeldevermittlungsanlagen, insbesondere für PCM-Fernsprechvermittlungsanlagen, mit Herstellung einzelner Verbindungen über jeweils ein Kanalpaar, dessen beide Einzelkanäle der Nachrichtenübertragung für diese Verbindung in der einen und der anderen Übertragungsrichtung dienen, und mit an die Eingänge eines mehrstufigen Koppelfeldes einzeln angeschlossenen Anschlussgruppen (LTG), in welchen die über das Koppelfeld nach dem Zeitmultiplexprinzip durchzuschaltenden und zu jeweils einer Verbindung gehörenden beiden Kanäle mittels Zwischenspeicherung der in jeder der beiden Übertragungsrichtungen zu übertragenden Nachrichteninformationen hinsichtlich Zeittakt und Pulsrahmengrenzen Synchronität aufweisen, indem die Schreibvorgänge und Lesevorgänge an den betreffenden Vollspeichern jeder dieser Anschlussgruppen bezüglich der zeitlichen Folge der einzelnen Teilinformationen und bezüglich der zeitlichen Lage der Pulsrahmengrenzen der die Teilinformationen abtastzyklusweise zusammenfassenden Pulsrahmen in Übereinstimmung gebracht sind, und in welchen solche zeitmultiplex durchgeschalteten und zu je einer Verbindung gehörenden beiden Kanäle in ihrem Verlauf von einer der genannten Einrichtungen über das Koppelfeld erneut zu derselben oder einer mit jeder taktsynchron und pulsrahmensynchron arbeitenden, ihr entsprechenden anderen dieser Anschlussgruppen Verzögerungseinflüssen unterliegen, die die zeitliche Folge der einzelnen Teilinformationen und die zeitliche Lage jeder der Pulsrahmengrenzen betreffen, und mit Verzögerungseinrichtungen, über die die Kanäle zeitmultiplex durchschaltbar sind und die einer zusätzlichen Verzögerung dienen, durch welche die über einen Kanal eines zu einer Verbindung gehörenden Kanalpaares in der genannten Anschlussgruppe vom Koppelfeld her eintreffenden oder die entsprechenden über den anderen Kanal dieses Kanalpaares zum Koppelfeld hin weiterzugebenden Teilinformationen hinsichtlich ihrer Zeitlagen und der der Pulsrahmengrenzen ihrer Pulsrahmen zeitlich in Übereinstimmung gebracht werden, um die genannte Synchronität zu gewährleisten.

Verzögerungseinrichtungen der zuvor genannten Art sind durch die DE-PS 2148994 bekannt. Mit dem Problem des darin u.a. behandelten sog. Rahmenausgleichs befassen sich die deutschen Patentschriften 1939027, 2021344 und 2109038. Dieser Rahmenausgleich wird mit Verzögerungseinrichtungen der vorerwähnten Art bewerkstelligt.

Ferner ist in der europäischen Patentanmeldung EP-A-0006133 eine PCM-Fernmeldevermittlungsanlage mit einer Zeitmultiplexkoppelanordnung mit Zeitlagenvielfachen, Anschlussgruppen sowie Raumkoppelstufen beschrieben, die zwischen den Zeitkanalkoppelstufen angeordnet sind. Hierin wird auch eine Verwendung von Laufzeitausgleichseinrichtungen vorgeschlagen, durch die Störungen aufgrund der räumlichen Ausdehnung der Anlage vermieden werden. Ferner ist auf die Zeitschrift «System Technology» H. 32, September 1979, S. 5–19, Liverpool, GB (PHILIP) sowie auf das Konferenzpapier «STRUCTURE OF TIME DIVISION SWITCHING NETWORKS» vom International Switching Symposium, Oktober 1976, S. 411.1.1–411.1.8, Kyoto, JP (FUKINUKI), hinzuweisen. Diese beiden Literaturstellen beschreiben ebenfalls Fernmeldevermittlungsanlagen, die wenigstens einen Teil der Merkmale der eingangs angegebenen Schaltungsanordnung aufweisen. Durch die genannten Literaturstellen ist es nun ganz allgemein bekannt, in Schaltungsanordnungen der hier behandelten Art Laufzeitunterschiede mit Hilfe von Ausgleichsspeichern auszugleichen, die sowohl in einem Koppelfeld als auch in den genannten Anschlussgruppen vorgesehen sein können.

Als Verzögerungseinrichtungen, die eingangs genannt wurden, dienen also u.a. Ausgleichsspeicher, z.B. Vollspeicher, in die über die Zeitkanäle einer ankommenden Zeitmultiplexleitung eintreffende Teilinformationen sukzessive zeitlagengemäss eingeschrieben werden, und aus denen diese Teilinformationen nach einer gemäss der gewünschten Verzögerung bemessenen Speicherzeit in der Reihenfolge des Einschreibens wieder ausgelesen werden, um über die mit dem Ausgleichsspeicher verbundene abgehende Zeitmultiplexleitung wieder ausgesendet zu werden. Solche Ausgleichsspeicher können so gestaltet sein, dass sich ihre Speicherzeit einstellen lässt. Sie können also hinsichtlich der jeweils vorliegenden Betriebssituation an bestehende Erfordernisse bezüglich ihrer Speicherzeit angepasst werden. Sind die über eine Zeitmultiplexleitung eintreffenden Teilinformationen durch Leitungseinflüsse oder dergleichen von einer Verzögerung um eine bestimmte Verzugszeit betroffen, so wird die Speicherzeit im betreffenden Ausgleichsspeicher so bemessen, dass die Summe aus Verzugszeit plus Speicherzeit gleich der Pulsrahmendauer − oder eines ganzzahligen Mehrfachen derselben − der Pulsrahmen ist, in denen die Teilinformationen über die Zeitmultiplexleitungen übertragen werden. Auf diese Weise werden die Pulsrahmengrenzen der Pulsrahmen zeitlich so verschoben, dass die Pulsrahmengrenzen der Pulsrahmen der über verschiedene Zeitmultiplexleitungen übertragenen Teilinformationen in zeitliche Übereinstimmung gebracht werden.

In Koppelfeldern der eingangs genannten und als bekannt vorausgesetzten Art sind mit den Koppelfeldeingängen sog. Line Trunk Groups, nachfolgend immer unter ihrer Kurzbezeichnung «LTG» erwähnt, verbunden. Unter einer LTG ist eine Anschlussgruppe für Zeitmultiplex-Verbindungsleitungen oder eine Anschlussgruppe für Analog-digital- und Digital-analog-Umsetzer und dergleichen zu verstehen. Diese LTG sind ebenfalls einzeln mit Koppelfeldausgängen verbunden. Über die Koppelfeldeingänge werden die Teilinformationen von den LTG in Richtung zum Koppelfeld hin übertragen. Über die Koppelfeldausgänge werden die über das Koppelfeld übertragenen Teilinformationen in Richtung zu den LTG weitergegeben. Aus diesen über die Koppelfeldausgänge im inneren Zusammenhang von Pulsrahmen sukzessive nacheinander weitergegebenen und in den LTG empfangenen Teilinformationen leiten die LTG den für ihre inneren Schaltfunktionen massgebenden Arbeitstakt ab, einschliesslich der Zeitlagen der Pulsrahmengrenzen. Danach bestimmen sich auch die Zeitlagen der von den LTG zum Koppelfeld hin im inneren Zusammenhang von Pulsrahmen sukzessive nacheinander übertragenen Teilinformationen einschliesslich der Zeitlagen der Pulsrahmengrenzen dieser Pulsrahmen.

Auf den Leitungen vom Koppelfeld zu den LTG sind die über diese Leitungen übertragenen Teilinformationen Leitungseinflüssen unterworfen, die eine Verzögerung dieser Teilinformationen im Sinne der eingangs genannten Verzögerungseinflüsse zur Folge haben. Darüberhinaus sind die inneren Schaltfunktionen der LTG von Verzögerungseinflüssen betroffen, die einen Verzug der Zeitlagen der von den LTG zu dem betreffenden Koppelfeldeingang übertragenen Teilinformationen gegenüber den seitens der LTG aus dem vom betreffenden Koppelfeldausgang zur LTG übertragenen Teilinformationen abgeleiteten Arbeitstakt einschliesslich der Zeitlagen der Pulsrahmengrenzen zur Folge haben. Schliesslich sind auch die von den LTG zum jeweiligen Koppelfeldeingang übertragenen Teilinformationen Leitungseinflüssen unterworfen, die sich ebenfalls als Verzögerungen auswirken und u.a. auch eine zeitliche Verschiebung der betreffenden Pulsrahmengrenzen zur Folge haben.

Diese an also an drei Stellen verursachten Verzögerungen können je nach Art und Länge der betreffenden Leitungen verschieden gross sein. Auch können die verschiedenen LTG unterschiedliche Verzögerungseinflüsse der oben erwähnten Art ausüben. Die hierdurch und durch die unterschiedlichen Leitungswerte bedingten Verzögerungen sind während des laufenden Betriebes gleichbleibend. Darüberhinaus aber kann in den LTG jeweils diejenige Einrichtung, die einem Aufsynchronisieren der jeweiligen LTG auf den vom Koppelfeld her gelieferten Arbeitstakt (einschliesslich Zeitlagen der Pulsrahmengrenzen) dient, von einer Störung betroffen werden. Hierdurch innerhalb einer LTG eintretende Verzögerungen der von der LTG zum betreffenden Koppelfeldeingang übertragenen Teilinformationen gegenüber den seitens der LTG aus dem vom betreffenden Koppelfeldausgang zur LTG übertragenen Teilinformationen abgeleiteten Arbeitstakt einschliesslich der Zeitlagen der Pulsrahmengrenzen sind also während des laufenden Betriebes nicht zwangsläufig gleichbleibend, sondern sie können lange Zeit überhaupt nicht auftreten, aber auch störungsbedingt jederzeit eintreten und sich auch in ihrem Ausmass während des laufenden Betriebes verändern.

Für die Erfindung besteht die Aufgabe, den erwähnten Verzögerungseinflüssen, die vom Aufbau einer Vermittlungsanlage und/oder auch von an sich geringfügigen Betriebsstörungen, z.B. hinsichtlich des Aufsynchronisierens seitens der LTG, her bedingt sein können, zu begegnen. Dies soll unter Berücksichtigung des Gesichtspunkts möglichst geringen Aufwandes bzw. einer möglichst guten Ausnutzung des erforderlichen Aufwandes geschehen.

Die Erfindung löst diese Aufgabe dadurch, dass in der letzten Koppelstufe vorgesehene Zeitlagenvielfache die empfangenen und in ihrem jeweiligen Vollspeicher zwischengespeicherten Teilinformationen in Pulsrahmen aussenden, deren Pulsrahmengrenzen zeitlagenmässig gegenüber den Pulsrahmengrenzen der Pulsrahmen der in dem betreffenden Zeitlagenvielfach empfangenen Teilinformationen um eine Verzugszeit versetzt sind, deren Dauer nach Massgabe der Differenz zwischen der Pulsrahmendauer einerseits und der Summe möglicher Maximalwerte derjenigen Verzögerungen andererseits festgelegt ist, die durch Leitungseinflüsse (Kabellaufzeiten) auf dem Weg vom Koppelfeldausgang zu der jeweiligen Anschlussgruppe und auf dem Weg von dieser zum betreffenden Koppelfeldeingang und durch Einflüsse, insbesondere Störungseinflüsse, innerhalb dieser Anschlussgruppe bedingt sind, und dass den Eingängen des Koppelfeldes zugeordnete und die von einer der genannten Anschlussgruppen empfangenen Teilinformationen pulsrahmenweise einschliesslich der Pulsrahmengrenzen zwischenspeichernde Ausgleichsspeicher diese Teilinformationen um eine solche Speicherzeit später wieder aussenden, die an die Differenz zwischen dem Maximalwert und dem Istwert der genannten Leitungseinflüsse und der genannten Einflüsse innerhalb der betreffenden Anschlussgruppe anpassbar ist.

Da die erforderliche Speicherkapazität derartiger Ausgleichsspeicher mit der von ihnen geforderten Speicherzeit ansteigt, d.h. ihre erforderliche Speicherkapazität umso kleiner sein darf, desto kleiner die geforderte Speicherzeit ist, kann durch die Erfindung der für diese Speicherung in den Ausgleichsspeichern insgesamt erforderliche Aufwand herabgesetzt werden, wodurch sich eine wesentliche Einsparung an Aufwand in vorteilhafter Weise erzielen lässt.

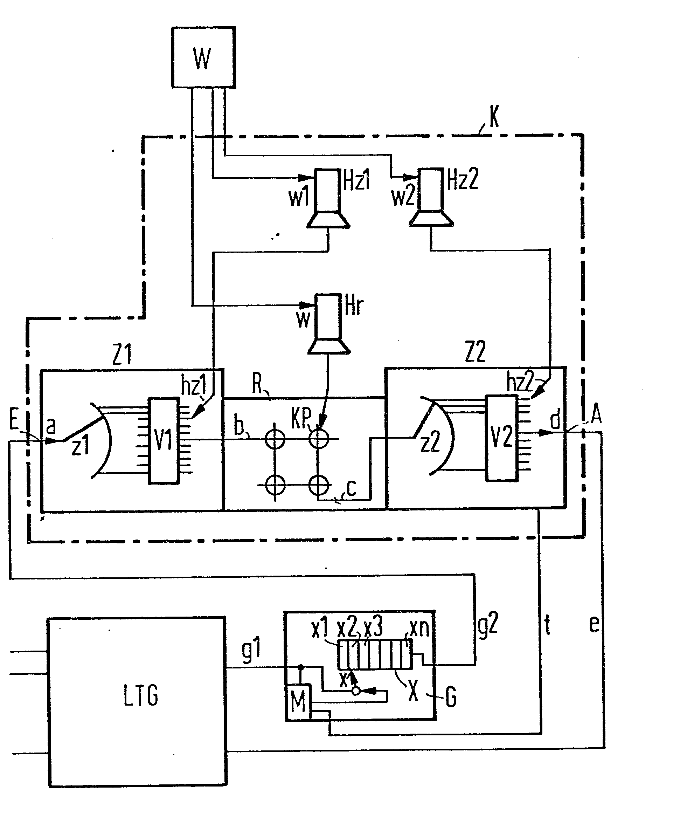

In der Zeichnung ist ein Ausführungsbeispiel der Erfindung nur in wesentlich zu ihrem Verständnis beitragenden Bestandteilen dargestellt. Die nachfolgende Beschreibung setzt ein für PCM-Verbindungen ausgelegtes mehrstufiges Koppelfeld, das teils aus Zeitstufen und teils aus Raumstufen aufgebaut ist, als für den Fachmann bereits vielfältig bekannt voraus; beispielsweise ist in der DE-AS 2108745, insbesondere FIG 1 nebst Beschreibung, ein derartiges Koppelfeld dargestellt und beschrieben. Anstelle eines Koppelfeldes, das aus einer Koppelstufe von Zeitlagenvielfachen Z1, einer Koppelstufe von Raumlagenvielfachen R und einer weiteren Koppelstufe von Zeitlagenvielfachen Z2 besteht, kann auch ein aus mehr Koppelstufen, teils von weiteren Zeitlagenvielfachen, teils von weiteren Raumlagenvielfachen, bestehendes Koppelfeld vorgesehen sein. Bevor sich die Beschreibung auf die speziell erfindungsgemässen Zusammenhänge des erläuterten Ausführungsbeispiels konzentriert, wird zunächst das in der Zeichnung dargestellte Koppelfeld K in allgemeinem Sinne erklärt.

In der Zeichnung sind vom Koppelfeld K zwei Zeitlagenvielfache Z1 und Z2 sowie ein Raumlagenvielfach R dargestellt. Eine an einem Koppelfeldeingang E des Koppelfeldes K ankommende Zeitmultiplexleitung ist mit a und eine von einem Koppelfeldausgang A abgehende Zeitmultiplexleitung ist mit d bezeichnet. Zeitmultiplex-Zwischenleitungen sind mit b und c bezeichnet. Diese Zwischenleitungen verbinden das Zeitlagenvielfach Z1 mit einem Eingang des Raumlagenvielfaches R sowie einen Ausgang desselben mit dem Zeitlagenvielfach Z2. Das Raumlagenvielfach R weist in an sich bekannter Weise Koppelpunkte auf, von denen einer mit «KP» bezeichnet ist.

Die dargestellten Zeitlagenvielfache und das Raumlagenvielfach sind Bestandteil einer grösseren PCM-Zeitmultiplexkoppelanordnung. Zur Herstellung einer Verbindung wird in an sich bekannter Weise mit Hilfe einer Wegesucheinrichtung W ein freier Verbindungsweg gesucht und ausgewählt, der über freie Verbindungskanäle der Zeitmultiplexleitungen aufgebaut werden kann. Im Zusammenhang hiermit sind Haltespeicher Hz1, Hz2 und Hr vorgesehen. Die Haltespeicher Hz1 und Hz2 sind einzeln den Zeitlagenvielfachen Z1 und Z2 zugeordnet. Der Haltespeicher Hr ist dem Raumlagenvielfach R zugeordnet.

Die zuvor erwähnten Haltespeicher dienen zur Speicherung von Vermittlungsdaten, die die Zuordnung abgehender Zeitkanäle zu ankommenden Zeitkanälen jeweils innerhalb eines der genannten Vielfache angeben. Diese Zuordnung entspricht den Durchschaltedaten für jeweils eine Verbindung in einem Raumkoppelvielfach konventioneller Art (Eingangskoordinatenleitungsnummer/Ausgangskoordinatenleitungsnummer).

Diese Vermittlungsdaten werden bekanntlich mit Hilfe einer Wegesucheinrichtung jeweils für eine Verbindung anhand von in einem Belegungsspeicher (in Anlagen älterer Bauart: Wegesuchnetzwerk) gespeicherten Daten über den Zustand (frei oder belegt) aller massgeblichen Teile des Koppelfeldes, hauptsächlich der Zwischenleitungen, durch informationsverarbeitende Verknüpfungsvorgänge ermittelt. Diese Vermittlungsdaten geben eindeutig den Verlauf einer über das mehrstufige Koppelfeld durchzuschaltenden und durchgeschalteten Verbindung hinsichtlich der dabei in Anspruch genommenen Zwischenleitungen und Koppelpunkte bzw. Zeitmultiplexleitungen, Zeitkanäle, Zeitlagen usw. an. Auch im vorliegenden Falle finden solche Wegesuchvorgänge für jede durchzuschaltende Verbindung statt. Handelt es sich dabei anstatt um eine Einkanalverbindung um eine Mehrkanalverbindung, so können mehrere solche Wegesuchvorgänge einzeln für die dabei erforderlichen mehreren Verbindungsherstellungsvorgänge durchgeführt werden.

Die mittels Wegesuchvorgängen ermittelten Vermittlungsdaten werden – soweit sie eine über die betreffende Zeitmultiplexkoppelanordnung führende Verbindung betreffen, in den Haltespeichern der Zeitlagenvielfache und der Raumlagenvielfache gespeichert. Bei den Zeitlagenvielfachen sind den Kanalnummern der abgehenden Zeitkanäle die Speicherplätze des jeweils zugeordneten Haltespeichers bleibend zugeordnet. Die über die ankommenden Zeitkanäle einer PCM-Zeitmultiplexleitung pro Pulsrahmen eintreffenden verbindungsindividuellen Teilinformationen werden zyklisch in den dem betreffenden Zeitlagenvielfach, z.B. Z1, jeweils zugeordneten Vollspeicher, z.B. V1, eingeschrieben. Im Gegensatz hierzu erfolgt der Lesebetrieb, der einer Weitergabe dieser Teilinformationen einzeln über die abgehenden Zeitkanäle dient, gemäss den Vermittlungsdaten, die die Zuordnung der abgehenden Zeitkanäle zu den ankommenden Zeitkanälen angeben und pro abgehenden Zeitkanal auf Speicherplätzen des Haltespeichers in Form von Speicherplatzadressen der Vollspeicher gespeichert sind. Im Haltespeicher ist also pro abgehenden Zeitkanal auf einem jeweils diesem bleibend zugeordneten Speicherplatz angegeben, unter welcher Vollspeicher-Speicherplatzadresse die über diesen Zeitkanal weiterzugebende Teilinformation eingeschrieben, d.h. zwischengespeichert ist.

Den Zeitkanälen einer abgehenden Zeitmultiplexleitung sind – wie erläutert – die Speicherplätze des Haltespeichers bleibend zugeordnet. Zwecks Weitergabe der zwischengespeicherten Teilinformationen aus dem Vollspeicher werden folglich die Speicherplätze des Haltespeichers gemäss den Zeitlagen der abgehenden Zeitkanäle zyklisch angesteuert.

Das zuvor erwähnte zyklische Einschreiben der über eine an einem PCM-Zeitlagenvielfach, z.B. Z1, Z2, ankommenden Zeitmultiplexleitung, z.B. a, c, eintreffenden Teilinformationen in den Vollspeicher, z.B. V1, V2, des betreffenden Zeitlagenvielfaches erfolgt mit Hilfe einer Ansteuerschreibeinrichtung, z.B. z1, z2. Die Ansteuerschreibeinrichtung eines Zeitlagenvielfaches wird also zwecks Abwicklung dieses zyklischen Einschreibens kontinuierlich weitergeschaltet.

Das Auslesen der über eine von einem PCM-Zeitlagenvielfach, z.B. Z1, Z2, weiterführenden Zeitmultiplexleitung, z.B. b, d, erfolgt mit Hilfe des betreffenden Haltespeichers. Den beiden Zeitlagenvielfachen Z1 und Z2 sind die Haltespeicher Hz1 und Hz2 zugeordnet. Den Zeitlagen der einzelnen Zeitkanäle der von den Zeitlagenvielfachen Z1 und Z2 abgehenden PCM-Zeitmultiplexleitungen b und d sind die Speicherplätze der Haltespeicher Hz1 und Hz2 fest zugeordnet. Die Speicherplätze der Haltespeicher werden in nicht dargestellter und an sich bekannter Weise zyklisch angesteuert.

Im vorliegenden Falle ist die Zuordnung der Haltespeicherplätze der Haltespeicher Hz1 und Hz2 zu den Zeitlagen der Zeitkanäle der PCM-Zeitmultiplexleitungen b und d also so getroffen, dass die in den Haltespeichern Hz1 und Hz2 jeweils aufeinanderfolgenden Speicherplätze in einem von Speicherplatz zu Speicherplatz fortschreitenden Sinne in der Reihenfolge der Zeitlagen den Zeitkanälen jeder der beiden PCM-Zeitmultiplexleitungen zugeordnet sind. Beim zyklischen Auslesen der in den Haltespeichern Hz1 und Hz2 gespeicherten Vollspeicherplatzadressen der Vollspeicher V1 und V2 werden also je für sich Vollspeicherplatzadressen des einen und des anderen dieser beiden Vollspeicher sukzessive nacheinander abgegeben. Mittels der Vollspeicherplatzadressen des Vollspeichers V1 wird in an sich bekannter Weise dessen Ansteuerleseeinrichtung hz1 gesteuert. Ebenso wird mit Hilfe der Vollspeicherplatzadressen des Vollspeichers V2 dessen Ansteuerleseeinrichtung hz2 gesteuert. Da in den Haltespeichern die pro abgehende Zeitmultiplexleitung b und d gespeicherten Vermittlungsdaten jeweils die Zuordnung zwischen einem Zeitkanal auf der abgehenden Zeitmultiplexleitung angeben, ist durch die beschriebene Steuerung der Ansteuerleseeinrichtungen hz1 und hz2 bestimmt, von welchem ankommenden Zeitkanal jeweils diejenige Teilinformation stammt, die über den abgehenden Zeitkanal zur Aussendung kommt, welcher gemäss zyklischem Auslesevorgang der Haltespeicher Hz1 und Hz2 in der gegebenen Zeitlage gerade zum Aussenden der betreffenden Teilinformation zeitlich an der Reihe ist.

Die Steuerung des Raumlagenvielfaches R mit Hilfe des Haltespeichers Hr ist nicht Gegenstand der Erfindung. Die betreffenden Steuervorgänge erfolgen in an sich bekannter Weise, wozu auf die bereits genannte Auslegeschrift hingewiesen sei.

Bei den Zeitlagenvielfachen Z1 und Z2 sind die Schreibvorgänge und Lesevorgänge an den Vollspeichern V1 und V2 in an sich bekannter Weise kontinuierlich durchführbar. Wie erläutert, wird der Schreibbetrieb, der einer Aufnahme der eintreffenden Teilinformationen einzeln pro ankommenden Zeitkanal an Speicherplätzen des Vollspeichers dient, zyklisch, und der Lesebetrieb, der einer Weitergabe dieser Teilinformationen einzeln über die abgehenden Zeitkanäle dient, gemäss den Vermittlungsdaten durchgeführt, die die Zuordnung der abgehenden Zeitkanäle zu den ankommenden Zeitkanälen angeben und pro abgehenden Zeitkanal auf Speicherplätzen des Haltespeichers Hz in Form von Speicherplatzadressen der Vollspeicher V1 und V2 gespeichert sind, durchgeführt. Im Gegensatz hierzu kann diese Zuordnung auch in umgekehrter Weise vorgesehen werden. Dies würde also bedeuten, dass der Schreibbetrieb gemäss den genannten Vermittlungsdaten und des Lesebetriebs zyklisch durchgeführt wird. Diese Alternative ist im einzelnen in der bereits oben erwähnten Auslegeschrift beschrieben.

Die Haltespeicher Hz1 und Hz2 weisen jeweils ausser einem Speicher mit der Anzahl der für die beiden Vollspeicher V1 und V2 zu speichernden Vollspeicher-Speicherplatzadressen entsprechenden Anzahl von Speicherplätzen eine Ansteuerschreibeinrichtung w1 und w2 und eine Ansteuerleseeinrichtung auf. Über die Ansteuerschreibeinrichtung werden die mit Hilfe der Wegesucheinrichtung W ermittelten Vermittlungsdaten in den Haltespeicher Hz eingeschrieben. Mit Hilfe der Ansteuerleseeinrichtung des Haltespeichers Hz werden diese Vermittlungsdaten in der beschriebenen Weise aus den Speicherplätzen des Haltespeichers ausgelesen.

Nachdem die Beschreibung bis hierher das Koppelfeld K und seine Funktionen in allgemeinem Sinne erklärt hat, werden nunmehr auch die speziell erfindungsgemässen Zusammenhänge in die Erläuterungen einbegriffen.

Zur Herstellung einzelner Verbindungen dient jeweils ein Kanalpaar, dessen beide Einzelkanäle der Nachrichtenübertragung für diese Verbindung in der einen und der anderen Übertragungsrichtung dienen. Die Eingänge, z.B. E, des Koppelfeldes K sind über Zeitmultiplexleitungen, z.B. die Zeitmultiplexleitung g1/g2, mit Anschlussgruppen, z.B. die Anschlussgruppe LTG (Line Trunk Group), einzeln verbunden. Eine solche Anschlussgruppe ist eingangsseitig mit Teilnehmerleitungen (analog), Analog-Verbindungsleitungen und mit PCM-Verbindungsleitungen beschaltbar. In einer Anschlussgruppe sind Codierer, Decodierer, Multiplexer, Demultiplexer und die für eine Realisierung der sogenannten BORSCHT-Funktionen erforderlichen Einrichtungen enthalten (vgl. NTZ Bd. 33/1980, Heft 10, Seiten 646 bis 652, und 1978 International Zurich Seminar on Digital Communications, Proccedings IEEE Catalogue Nr. 78 CH 1325-O ASST, Seiten B2.1, A4.1). Bei diesen Anschlussgruppen handelt es sich um die an die Eingänge des mehrstufigen Koppelfeldes K einzeln angeschlossenen Einrichtungen (LTG), in welchen die über das Koppelfeld nach dem Zeitmultiplexprinzip durchzuschaltenden und zu jeweils einer Verbindung gehörenden beiden Kanäle mittels Zwischenspeicherung der in jeder der beiden Übertragungsrichtungen zu übertragenden Nachrichteninformationen hinsichtlich Zeittakt und Pulsrahmengrenzen Synchronität aufweisen. Hierzu ist in Zusammenhang mit der erwähnten Codierung und Decodierung und mit den Multiplexern und Demultiplexern eine Zwischenspeicherung der PCM-Informationen pro Verbindung vorgesehen. Für einen Anschluss von PCM-Verbindungsleitungen, die zu anderen Vermittlungsstellen führen oder von diesen herangeführt sind, können auch Ausgleichsspeicher zum Rahmenausgleich bezüglich der Informationsübertragung über diese PCM-Verbindungsleitungen in den Anschlussgruppen vorgesehen sein. In ihnen können also jeweils alle zum Anschluss der oben genannten Leitungen (in der Zeichnung links von LTG) erforderlichen zuvor aufgeführten Schaltmittel oder auch nur die jeweils funktionsbedingt erforderlichen vorgesehen sein.

Zweckmässig sind die Anschlussgruppen mit Vollspeichern ausgestattet. Die Schreibvorgänge und Lesevorgänge an den betreffenden Vollspeichern jeder dieser Anschlussgruppen sind bezüglich der zeitlichen Folge der einzelnen Teilinformationen und bezüglich der zeitlichen Lage der Pulsrahmengrenzen der die Teilinformationen abtastzyklusweise zusammenfassenden Pulsrahmen in Übereinstimmung gebracht. Dies betrifft also zwei jeweils zu einer Verbindung zusammengehörende Kanäle unterschiedlicher Übertragungsrichtung und innerhalb einer Anschlussgruppe.

Solche zu je einer Verbindung gehörenden beiden Kanäle verlaufen von einer Anschlussgruppe über das Koppelfeld erneut zu derselben oder einer mit jener taktsynchron und pulsrahmensynchron arbeitenden, ihr entsprechenden anderen Anschlussgruppe. Von einer Anschlussgruppe führte eine Zeitmultiplexleitung g1/g2 zu einem Eingang E des Koppelfeldes K. Von einem seiner Ausgänge führt eine Zeitmultiplexleitung e zu derselben Anschlussgruppe. Von dieser her betrachtet ist diese Anschlussgruppe also mittels einer hinsichtlich der Informations-Übertragungsrichtung abgehenden und einer diesbezüglich ankommenden Zeitmultiplexleitung mit dem Koppelfeld verbunden. Von den zu einer Verbindung gehörenden und der Realisierung der einen Übertragungsrichtung (z.B. vom rufenden Teilnehmer zum gerufenen Teilnehmer) und der anderen Übertragungsrichtung (z.B. umgekehrt wie zuvor) dienenden beiden Kanälen verläuft der eine (betrachtet in der Richtung vom rufenden Teilnehmer zum gerufenen Teilnehmer) über die Anschlussgruppe LTG, über die Zeitmultiplexleitung g1/g2, über das Koppelfeld K, über die Zeitmultiplexleitung e und nochmals über die Anschlussgruppe LTG. Der andere dieser beiden Kanäle (ebenfalls betrachtet in der Richtung vom rufenden Teilnehmer zum gerufenen Teilnehmer), der also der entgegengesetzten Übertragungsrichtung dient, verläuft von der Anschlussgruppe LTG über die Zeitmultiplexleitung e, das Koppelfeld K, die Zeitmultiplexleitung g2/g1 und nochmals über die Anschlussgruppe LTG; zuletzt wurde also der Verlauf des zweiten der beiden Kanäle hinsichtlich der Übertragungsrichtung rückwärts dargestellt.

Hinsichtlich Taktversorgung steht die Anschlussgruppe LTG in Steuerungsabhängigkeit vom Koppelfeld K, und zwar in Steuerungsabhängigkeit von hier nicht im einzelnen erläuterten Steuerungseinrichtungen des Koppelfeldes. Diese liefern u.a. zur Abwicklung der Schreibvorgänge und der Lesevorgänge an den Vollspeichern eine endlose Folge von Taktimpulsen, gemäss welchen auch die Aussendung der Teilinformationen vom Zeitlagenvielfach Z2 über die Zeitmultiplexleitung e zur Anschlussgruppe LTG abgewickelt wird. Von hier werden die Teilinformationen über die Kanäle einer angeschlossenen Zeitmultiplexleitung oder − nach Umsetzung − über einzelne Verbindungsleitungen (analog) weiter übertragen oder es erfolgt in an sich bekannter Weise eine entsprechende Umsetzung bei Verbindungen zu Teilnehmeranschlussleitungen (analog).

Aus der Folge der von dem Zeitlagenvielfach Z2 zur Anschlussgruppe LTG in Zusammenhang von Pulsrahmen übertragenen Teilinformationen erkennt diese Anschlussgruppe auch das stets wiederkehrende Rahmenerkennungsbit (frame mark bit), welches die Zeitlage der Pulsrahmengrenzen dieser Pulsrahmen markiert. Hieraus leitet die Anschlussgruppe nicht nur den für die Abwicklung ihrer Arbeitsvorgänge massgebenden Impulstakt ab, sondern auch die Zeitlage der Pulsrahmengrenzen; hiernach richtet sich sowohl die Weiterleitung der genannten Teilinformationen von der Anschlussgruppe LTG über die an sie angeschlossenen Leitungen (Kanäle einer angeschlossenen Zeitmultiplexleitung oder analoge Verbindungsleitungen oder Teilnehmerleitungen, ebenfalls analog) als auch der Empfang von Teilinformationen in der Gegenrichtung; letztere Teilinformationen sind also die, die über die Zeitmultiplexleitung g1/g2 zum Koppelfeld K hin weiterzuleiten sind. In der Anschlussgruppe LTG treffen diese Teilinformationen über den für die betreffenden Verbindungen jeweils belegten zweiten Kanal der jeweiligen Zeitmultiplexleitung ein, oder es treffen hier Analogsignale ein, die in der Anschlussgruppe LTG erst in entsprechende Teilinformationen (PCM-Signale) umgesetzt werden.

Für die von der LTG zum Koppelfeld K über die Zeitmultiplexleitung g1/g2 zu übertragenden Teilinformationen ist nun ausser dem Takt der Teilinformationen, die über die Zeitmultiplexleitung e zur Anschlussgruppe LTG übertragen werden, auch die Zeitlage von deren Pulsrahmengrenzen, also die Zeitlage des Rahmenerkennungsbits massgebend, und zwar massgebend für die Zeitlage der Pulsrahmengrenzen der von der Anschlussgruppe LTG über die Zeitmultiplexleitung g1/g2 zum Zeitlagenvielfach Z1 des Koppelfeldes K übertragenen Teilinformationen. Wenngleich nun die Zeitlagenvielfache der verschiedenen Koppelstufen so betrieben werden können, dass sie mit zeitgleichen Pulsrahmengrenzen arbeiten, so tritt doch auf den Zeitmultiplexleitungen g1/g2 und e jeweils eine Verzögerung auf, die auf Leitungseinflüsse dieser Zeitmultiplexleitungen (Kabellaufzeiten) beruhen. Das Koppelfeld selbst ist räumlich sehr geschlossen aufgebaut. Dagegen verlaufen die Zeitmultiplexleitungen g1/g2 über verschieden weite Entfernungen innerhalb der betreffenden Vermittlungsstelle. Hieraus ergeben sich unterschiedlich grosse Verzögerungen bei den verschiedenen Zeitmultiplexleitungen zwischen dem Koppelfeld K und den verschiedenen Anschlussgruppen LTG. An dieser Stelle vorwegnehmend für die weitere Beschreibung sei eingefügt, dass die Zeitmultiplexleitung g1/g2 über einen Ausgleichsspeicher G führt. Wird dieser baulich in das Koppelfeld K integriert oder an dasselbe unmittelbar angegliedert, so wird von der Zeitmultiplexleitung g1/g2 der in der Zeichnung mit g2 bezeichnete Teil entsprechend verkürzt oder er wird zu einer blossen Zeitmultiplexzwischenleitung (koppelfeldintern), so dass die Leitungseinflüsse im wesentlichen nur von dem mit g1 bezeichneten Teil dieser Zeitmultiplexleitung herrühren.

Der zuvor erwähnte Ausgleichsspeicher ist eine Verzögerungseinrichtung, über die die Kanäle zeitmultiplex durchschaltbar sind und die einer zusätzlichen Verzögerung dienen. Ferner weist die Anschlussgruppe LTG eine innere Verzögerung hinsichtlich der Zeitdifferenz zwischen der Zeitlage des empfangenen (über e) Rahmenerkennungswortes über der Zeitlage des ausgesendeten (über g1/g2) Rahmenerkennungswortes auf.
Diese Verzögerung kann variieren. Sie hat einen
konstanten Grundwert, der gerätbedingt ist. Das
Zeitmass dieser Verzögerung kann aber auch ansteigen, und zwar störungsbedingt, also bei Eintreten eines Funktionsmangels oder eines Funktionsfehlers.

Die Summe aller Verzögerungen zwischen der
Zeitlage des vom Zeitlagenvielfach Z2 ausgesendeten Rahmenerkennungsbits und der Zeitlage
des – wie oben dargelegt, hierdurch ursächlich
bedingten – vom Zeitlagenvielfach Z1 empfangenen Rahmenerkennungsbits kann einen Minimalwert und einen Maximalwert annehmen. Den Minimalwert nehmen diese Verzögerungen an,
wenn sowohl die betreffende Anschlussgruppe
völlig mängelfrei und störungsfrei arbeitet als
auch die betreffenden Zeitmultiplexleitungen g1/
g2 und e die geringsten in der Vermittlungsstelle
vorkommenden Kabellängen aufweisen. Den Maximalwert nehmen diese Verzögerungen ein,
wenn sowohl die betreffende Anschlussgruppe
mangelhaft oder störungsbehaftet arbeitet innerhalb zulässiger Grenzwerte bezüglich des dadurch
bedingten Verzögerungseinflusses, als auch diese
Zeitmultiplexleitungen die grössten in der Vermittlungsstelle vorkommenden Kabellängen aufweisen.

Um nun – wie angegeben – das Koppelfeld K in
seinen verschiedenen Koppelstufen mit zeitgleichen Pulsrahmengrenzen arbeiten lassen zu können, muss dafür gesorgt sein, dass die Pulsrahmengrenzen der über den Eingang E des Zeitlagenvielfaches Z1 empfangenen Teilinformationen
zeitgleich sind mit den innerhalb des Koppelfeldes
herrschenden Pulsrahmengrenzen. Hierzu sind
nun zweierlei Massnahmen getroffen. Erstens ist
vorgesehen, dass die in der letzten Koppelstufe
vorgesehenen Zeitlagenvielfache, z.B. Z2, die
empfangenen und in ihrem jeweiligen Vollspeicher, z.B. V2, zwischengespeicherten Teilinformationen in Pulsrahmen aussenden, deren Pulsrahmengrenzen zeitlagenmässig gegenüber den
Pulsrahmengrenzen der Pulsrahmen der in dem
betreffenden Zeitlagenvielfach, z.B. Z2, empfangenen Teilinformationen um eine bestimmte
gleichbleibend eingestellte Verzugszeit versetzt
sind; die Dauer dieser Verzugszeit ist nach Massgabe der Differenz zwischen der Pulsrahmendauer
einerseits und der Summe möglicher Maximalwerte derjenigen Verzögerungen andererseits
festgelegt, die durch Leitungseinflüsse (Kabellaufzeit) auf dem Weg vom Koppelfeldausgang, z.B.
A, zu der jeweiligen Anschlussgruppe LTG und auf
dem Weg von dieser zum betreffenden Koppelfeldeingang, z.B. E, und durch Einflüsse, insbesondere Störungseinflüsse, innerhalb dieser Einrichtung bedingt sind. Maximalwerte von durch
die letzteren Einflüsse bedingten Verzögerungen
sind – wie bereits erwähnt – betrieblich zugelassene Maximalwerte. – Zweitens ist vorgesehen
(s.o.!), dass den Eingängen, z.B. E, des Koppelfeldes K die von einer der Anschlussgruppen LTG
empfangenen Teilinformationen pulsrahmenweise einschliesslich der Pulsrahmengrenzen zwischenspeichernde Ausgleichsspeicher zugeordnet
sind, die diese Teilinformationen um eine solche
Speicherzeit später wieder aussenden, die an die
Differenz zwischen dem Maximalwert und dem
Istwert der genannten Leitungseinflüsse und der
genannten Einflüsse innerhalb der betreffenden
Einrichtung anpassbar ist. Durch diese beiden
Massnahmen wird bewirkt, dass zu der Summe
der genannten Verzögerungen die genannte
gleichbleibend eingestellte bestimmte Verzugszeit
(verursacht vom Zeitlagenvielfach Z2 der letzten
Koppelstufe) und die an die jeweils gegebenen
Betriebsverhältnisse anpassbare Speicherzeit
(Zwischenspeicherung im Ausgleichsspeicher G)
hinzukommen mit dem Ziel, dass diese Verzögerungen dadurch auf eine Gesamtverzögerung von
der Dauer eines Pulsrahmens erhöht werden, wodurch die geforderte Zeitgleichheit der Pulsrahmengrenzen erreicht wird. In vorteilhafter Weise
werden die zu den genannten Verzögerungen erforderlicherweise hinzukommenden zusätzlichen
Verzögerungen (bis zur Gesamtverzögerung von
der Dauer eines Pulsrahmens) nur zum Teil von
dem Ausgleichsspeicher G bewirkt, aber zum Teil
bereits von dem Zeitlagenvielfach der letzten Koppelstufe, und zwar in dem Masse des Minimalwertes dieser erforderlicherweise hinzukommenden
zusätzlichen Verzögerungen (Minimalwert, damit
der Maximalwert der insgesamt auf den Zeitmultiplexleitungen e und g1/g2 sowie in der Anschlussgruppe möglicherweise auftretenden Verzögerungen kompensiert, d.h. auf eine Pulsrahmendauer
aufgefüllt wird). Der Ausgleichsspeicher G kann
deshalb hinsichtlich seiner Speicherkapazität wesentlich schwächer bemessen werden, wodurch
erheblich Aufwand eingespart wird. Seine Speicherkapazität braucht lediglich für eine grösste
Speicherzeit bemessen zu sein, die die Differenz
zwischen dem genannten Maximalwert und dem
genannten Minimalwert zu überbrücken vermag.

Die bei den Zeitlagenvielfachen der letzten Koppelstufe gleichbleibend eingestellte bestimmte
Verzugszeit (gemäss der ersten der wie oben angegebenen vorgesehenen Massnahmen) kann bei
dem hier beschriebenen Ausführungsbeispiel in
unterschiedlicher Weise bewirkt werden. Es ist
z.B. möglich, beim weiter oben erläuterten Einschreiben der aus der Wegesuche gewonnenen
Vermittlungsdaten in einen Haltespeicher die erforderliche Verzugszeit zu berücksichtigen. In den
Haltespeicher, der ja zyklisch gelesen wird, werden die Adressen der Speichereinheiten des Vollspeichers, aus dem die zu zeitmultiplex-vermittlungstechnischem Zweck zwischengespeicherten
Teilinformationen bei ihrer Wiederaussendung
gemäss diesen Adressen gelesen werden, mit einer der obigen Verzugszeit entsprechenden Verschiebung eingeschrieben. Die Vollspeicherplatzadressen werden also nicht gemäss den aus der
Wegesuche jeweils gewonnenen Haltespeicherplatzadressen in die Speicherplätze des Haltespeichers eingeschrieben, sondern – unter der Voraussetzung fortlaufend nummerierter Haltespeicherplätze – gemäss Haltespeicherplatzadressen, die durch Addition eines der genannten Verschiebung entsprechenden Zahlenwertes zu den aus der Wegesuche gewonnenen Haltespeicherplatzadressen erhalten werden. Ergibt diese Addition eine Summe, die grösser ist als die Anzahl von Teilinformationen pro Pulsrahmen (diese Anzahl entspricht der Anzahl von Kanälen auf der Zeitmultiplexleitung), so wird diese Anzahl von der erhaltenen Summe abgezogen. Diese Verschiebung betrifft nicht nur die Teilinformationen, sondern auch das am Anfang eines Pulsrahmens stehende Rahmenerkennungsbit. Folglich wird das Rahmenerkennungsbit um die genannte Verzugszeit später ausgesendet.

In diesem Zusammenhang sei der Vollständigkeit halber hinzugefügt, dass diejenigen Teilinformationen, bei denen die Addition des der Verschiebung entsprechenden Zahlenwertes zu der aus der Wegesuche gewonnenen Haltespeicherplatzadresse eine Summe grösser als die Anzahl von Teilinformationen pro Pulsrahmen ergibt, und bei denen von dieser Summe die letztgenannte Anzahl abgezogen wird, eine Aussendung gemäss den an den ersten Speicherplätzen des Haltespeichers gespeicherten Vollspeicherplatzadressen erfolgt. Diese Teilinformationen sind hinsichtlich der Pulsrahmen gegenüber den übrigen Teilinformationen um einen Pulsrahmen vorverlegt. Dies aber ist ohne praktische Bedeutung, weil die Reihenfolge der Teilinformation innerhalb eines Pulsrahmens, also die Kanalzuordnung zu den einzelnen Verbindungen, dadurch keine Veränderung erfährt.

Die bei den Zeitlagenvielfachen der letzten Koppelstufe gleichbleibend eingestellte bestimmte Verzugszeit (gemäss der ersten der wie oben angegeben vorgesehenen Massnahmen) kann bei dem hier beschriebenen Ausführungsbeispiel auch auf verschiedene andere Weise bewirkt werden, als es zuvor detailliert erläutert wurde, z.B. durch eine entsprechende Verschiebung beim Einschreiben der Teilinformationen in den Vollspeicher. Ebensogut ist es auch möglich, das Schreiben der Teilinformationen in den Vollspeicher des Zeitlagenvielfaches Z2 gemäss den im Haltespeicher gespeicherten Informationen durchzuführen und die Teilinformationen zyklisch aus dem Vollspeicher auszulesen; in diesem Zusammenhang besteht nun die Möglichkeit, die weiter oben genannte zur Erfindung gehörende Versetzung der Pulsrahmengrenzen um die erwähnte Verzugszeit dadurch zu bewirken, dass beim zyklischen Lesen der Teilinformationen aus dem Vollspeicher die für diese Versetzung geeigneten Massnahmen getroffen werden.

Bezüglich der Ausgleichsspeicher, z.B. G, wurde weiter oben u.a. ausgeführt, dass den Eingängen, z.B. E, des Koppelfeldes K die von einer der Anschlussgruppen LTG empfangenen Teilinformationen pulsrahmenweise einschliesslich der Pulsrahmengrenzen zwischenspeichernde Ausgleichsspeicher zugeordnet sind, die diese Teilinformationen um eine solche Speicherzeit später wieder aussenden, die an die Differenz zwischen dem Maximalwert und dem Istwert der genannten Leitungseinflüsse und der genannten Einflüsse innerhalb der betreffenden Einrichtung anpassbar ist. Hierzu kann im Ausgleichsspeicher G z.B. ein Schieberegister vorgesehen sein, in das die Teilinformationen einschliesslich des Pulsrahmenerkennungsbits Pulsrahmen für Pulsrahmen eingeschrieben und entsprechend später wieder ausgelesen werden. Hierzu kann nun vorgesehen sein, dass zur Anpassung der Speicherzeit in der angegebenen Weise der Zeitunterschied der Zeitlage des Pulsrahmenerkennungswortes der über den Zeitmultiplexleitungsteil g1 eintreffenden Teilinformationen gegenüber der Zeitlage des Pulsrahmenerkennungswortes der über den Zeitmultiplexleitungsteil g2 weiterzugebenden Teilinformationen (das ist also die Zeitlage des Pulsrahmenerkennungswortes im Koppelfeld K allgemein!) gemessen wird, und dass gemäss diesem Zeitunterschied die im Ausgleichsspeicher einzuschreibenden Teilinformationen einschliesslich des Rahmenerkennungswortes einem solchen Schieberegisterglied zugeführt werden, das dem der Ausgabe des Schieberegisterinhaltes dienenden Schieberegisterglied um eine der erforderlichen Speicherzeit entsprechende Anzahl von Schieberegistergliedern vorgeordnet ist. Zur Realisierung der zuvor erläuterten Funktionen kann in dem Ausgleichsspeicher G eine Messeinrichtung M vorgesehen sein, die den Zeitunterschied der Zeitlage der Pulsrahmengrenzen der Pulsrahmen der über den Zeitmultiplexleitungsteil g1 empfangenen Teilinformationen gegenüber der Zeitlage der Pulsrahmengrenzen im Koppelfeld K (die diesbezügliche Information empfängt die Messeinrichtung M vom Koppelfeld K über den Strompfad t) misst. Nach Massgabe dieses Messergebnisses wird im Ausgleichsspeicher G eine Einspeichersteuereinrichtung x auf dasjenige der Schieberegisterglieder x1, x2, ...xn des Schieberegisters X, z.B. auf das Schieberegisterglied x4, eingestellt, bei dem die obige Bedingung unter den jeweils gegebenen Betriebsbedingungen erfüllt ist.

Es sind auch noch in den Anschlussgruppen LTG Ausgleichsspeicher vorgesehen. Diese dienen dazu, die in der Übertragungsrichtung vom Koppelfeld her eintreffenden oder die entsprechenden über den jeweils anderen Kanal dieses Kanalpaares zum Koppelfeld hin weiterzugebenden Teilinformationen hinsichtlich ihrer Zeitlagen und der der Pulsrahmengrenzen ihrer Pulsrahmen zeitlich in Übereinstimmung zu bringen. Diese sowie der davor beschriebene Ausgleichsspeicher (G) können ausser als Schieberegister auch mit Hilfe eines Vollspeichers realisiert sein, bei welchem eine Schreibeinrichtung gegenüber einer Leseeinrichtung mit einer dem obigen Messergebnis entsprechenden Voreilung arbeitet, indem der für jedes der Vollspeicherglieder jeweils durchzuführende Lesevorgang gegenüber dem entsprechenden Schreibvorgang später stattfindet.

## Patentansprüche

1. Schaltungsanordnung für Zeitmultiplex-Fernmeldevermittlungsanlagen, insbesondere für PCM-Fernsprechvermittlungsanlagen, mit Herstellung einzelner Verbindungen über jeweils ein Kanalpaar, dessen beide Einzelkanäle der Nachrichtenübertragung für diese Verbindung in der einen und der anderen Übertragungsrichtung dienen, und mit an die Eingänge (E, A) eines mehrstufigen Koppelfeldes (K) einzeln angeschlossenen Anschlussgruppen (LTG), in welchen die über das Koppelfeld (K) nach dem Zeitmultiplexprinzip durchzuschaltenden und zu jeweils einer Verbindung gehörenden beiden Kanäle mittels Zwischenspeicherung der in jeder der beiden Übertragungsrichtungen zu übertragenden Nachrichteninformationen hinsichtlich Zeittakt und Pulsrahmengrenzen Synchronität aufweisen, indem die Schreibvorgänge und Lesevorgänge an den betreffenden Vollspeichern jeder dieser Anschlussgruppen (LTG) bezüglich der zeitlichen Folge der einzelnen Teilinformationen und bezüglich der zeitlichen Lage der Pulsrahmengrenzen der die Teilinformationen abtastzyklusweise zusammenfassenden Pulsrahmen in Übereinstimmung gebracht sind, und in welchen solche zeitmultiplex durchgeschalteten und zu je einer Verbindung gehörenden beiden Kanäle in ihrem Verlauf von einer der genannten Anschlussgruppen (LTG) über das Koppelfeld (K) erneut zu derselben oder einer mit jener taktsynchron und pulsrahmensynchron arbeitenden, ihr entsprechenden anderen dieser Anschlussgruppen (LTG) Verzögerungseinflüssen unterliegen, die die zeitliche Folge der einzelnen Teilinformationen und die zeitliche Lage jeder der Pulsrahmengrenzen betreffen, und mit Verzögerungseinrichtungen (V2, G), über die die Kanäle zeitmultiplex durchschaltbar sind und die einer zusätzlichen Verzögerung dienen, durch welche die über einen Kanal eines zu einer Verbindung gehörenden Kanalpaares in den genannten Anschlussgruppen (LTG) vom Koppelfeld (K) her eintreffenden oder die entsprechenden über den anderen Kanal dieses Kanalpaares zum Koppelfeld (K) hin weiterzugebenden Teilinformationen hinsichtlich ihrer Zeitlagen und der der Pulsrahmengrenzen ihrer Pulsrahmen zeitlich in Übereinstimmung gebracht werden, um die genannte Synchronität zu gewährleisten, dadurch gekennzeichnet, dass in der letzten Koppelstufe vorgesehene Zeitlagenvielfache (Z2) die empfangenen und in ihrem jeweiligen Vollspeicher (V2) zwischengespeicherten Teilinformationen in Pulsrahmen aussenden, deren Pulsrahmengrenzen zeitlagenmässig gegenüber den Pulsrahmengrenzen der Pulsrahmen der in dem betreffenden Zeitlagenvielfach (Z2) empfangenen Teilinformationen um eine Verzugszeit versetzt sind, deren Dauer nach Massgabe der Differenz zwischen der Pulsrahmendauer einerseits und der Summe möglicher Maximalwerte derjenigen Verzögerungen andererseits festgelegt ist, die durch Leitungseinflüsse (Kabellaufzeit) auf dem Weg vom Koppelfeldausgang (A) zu den jeweiligen Anschlussgruppen (LTG) und auf dem Weg von dieser zum betreffenden Koppelfeldeingang (E) und durch Einflüsse, insbesondere Störungseinflüsse, innerhalb dieser Anschlussgruppen (LTG) bedingt sind, und dass den Eingängen (E) des Koppelfeldes K zugeordnete und die von einer der genannten Anschlussgruppen (LTG) empfangenen Teilinformationen pulsrahmenweise einschliesslich der Pulsrahmengrenzen zwischenspeichernde Ausgleichsspeicher (G) diese Teilinformationen um eine solche Speicherzeit später wieder aussenden, die an die Differenz zwischen dem Maximalwert und dem Istwert der genannten Leitungseinflüsse und der genannten Einflüsse innerhalb der betreffenden Anschlussgruppen (LTG) enpassbar ist.

2. Schaltungsanordnung nach Anspruch 1, dadurch gekennzeichnet, dass in den Ausgleichsspeichern (G) jeweils ein Schieberegister (X) vorgesehen ist, in das die Teilinformationen einschliesslich des Pulsrahmenkennungsbits Pulsrahmen für Pulsrahmen eingeschrieben und entsprechend später wieder ausgelesen werden, und dass zur Anpassung der Speicherzeit in der angegebenen Weise der Zeitunterschied der Zeitlage des Pulsrahmenerkennungsbits der im betreffenden Ausgleichsspeicher (G) eintreffenden Teilinformationen gegenüber der Zeitlage des Pulsrahmenerkennungsbits im Koppelfeld (K) gemessen wird (mittels M), und das gemäss diesem Zeitunterschied die im Ausgleichsspeicher (G) einzuschreibenden Teilinformationen einschliesslich des Rahmenerkennungsbits einem solchen Schieberegisterglied (z.B. x3) zugeführt werden, dass dem der Ausgabe des Schieberegisterinhaltes dienenden Schieberegisterglied (xn) um eine der erforderlichen Speicherzeit entsprechende Anzahl (n-3) von Schieberegistergliedern vorgeordnet ist.

3. Schaltungsanordnung nach Anspruch 1, dadurch gekennzeichnet, dass in den Ausgleichsspeichern (G) jeweils ein Vollspeicher vorgesehen ist, bei welchem eine Schreibeinrichtung gegenüber einer Leseeinrichtung mit einer Voreilung arbeitet, indem der für jedes der Vollspeicherglieder jeweils durchzuführende Lesevorgang gegenüber dem entsprechenden Schreibvorgang um soviel später stattfindet, wie der durch einen Messvorgang feststellbare Zeitunterschied der Zeitlage des Pulsrahmenerkennungsbits der im Ausgleichsspeicher eintreffenden Teilinformationen gegenüber der Zeitlage des Pulsrahmenerkennungsbits im Koppelfeld (K) bestimmt.

## Claims

1. A circuit arrangement for t.d.m. telecommunications exchanges, in particular for PCM telephone exchanges, comprising establishment of connections via a pair of channels in each case, whose two individual channels serve for the communication transmission for this connection in the one and the other transmission direction, and comprising terminal groups (LTG) which are individually connected to the inputs (E, A) of a multistage switching network (K) and in which the two channels, which are to be switched through via the switching network (K) in accordance with the t.d.m. principle and which are respectively assigned to a connection, exhibit synchronism in respect of the time cycle and pulse frame boundaries by means of intermediate storage of the items of communication information which are to be transmitted in each of the two transmission directions, in that the writing operations and reading operations at the respective full stores of each of these terminal groups (LTG) are brought into conformity in respect of the time sequence of the individual items of partial information and in respect of the time position of the pulse frame boundaries of the pulse frames which combine the items of partial information in the manner of a sampling cycle, and in which terminal groups, in their course from one of said terminal groups (LTG) via the switching network (K) to the same again or another of these terminal groups (LTG) which corresponds to the former and operates synchronously with the former in respect of clock pulse and pulse frame, two channels of the kind which are switched through in a t.d.m. fashion and respectively assigned to a connection, are subjected to delay effects which relate to the time sequence of the individual items of partial information and to the time position of each of the pulse frame boundaries, and comprising delay devices (V2, G), by means of which the channels can be switched through in a t.d.m. fashion and which serve for an additional delay, by means of which the items of partial information which arrive in said terminal groups (LTG) from the switching network (K) via a channel of a channel pair assigned to a connection or the corresponding items of partial information which are to be transmitted to the switching network (K) via the other channel of this channel pair, are brought into conformity in terms of time in respect of their time slots and those of the pulse frame boundaries of their pulse frames in order to ensure said synchronism, characterised in that time slot multiplexers (Z2), which are arranged in the last switching network stage, transmit the received partial information, which is intermediately stored in their respective full store (V2), in pulse frames whose pulse frame boundaries are staggered in terms of time slots by a delay time compared with the pulse frame boundaries of the pulse frames of the items of partial information which are received in the respective time slot multiplexer (Z2), the duration of which delay time is determined in accordance with the difference between the pulse frame duration on the one hand and on the other hand the sum of possible maximal values of those delays which are conditional upon line effects (cable transit time) on the way from the switching network output (A) to the respective terminal groups (LTG) and on the way from the latter to the respective switching network input (E) and upon effects, in particular disturbance effects, within these terminal groups (LTG), and that compensating stores (G) which are assigned to the inputs (E) of the switching network (K) and which intermediately store the items of partial information, which are received from one of said terminal groups (LTG), in the manner of a pulse frame incuding the pulse frame boundaries, re-transmit these items of partial information later by such a storage time which can be matched to the difference between the maximal value and the acutal value of said line effects and said effects within the respective terminal groups (LTG).

2. A circuit arrangement as claimed in claim 1, characterised in that a shift register (K) is respectively arranged in the compensating stores (G), into which register the partial information including the pulse frame recognition bits are written-in and correspondingly later read-out pulse frame by pulse frame, and that in order to adapt the storage time in the described manner the time difference of the time slot of the pulse frame recognition bit of the items of partial information which arrive in the respective compensating store (G), compared with the time slot of the pulse frame recognition bit in the switching network (K) is measured (by means of M), and that in accordance with this time difference the items of partial information which are to be written into the compensating store (G), including the frame recognition bit, are fed to such a shift register element (e.g. x3) that the shift register element (xn), which serves for the output of the shift register contents, is preceded by a number (n-3) of shift register elements which corresponds to the required storage time.

3. A circuit arrangement as claimed in claim 1, characterised in that in the compensating stores (G) there is respectively arranged a full store, wherein a writing device operates with a lead compared with a reading device, in that the reading operation which is to be carried out for each of the full store elements, takes place later compared with the corresponding writing operation by such an amount as is determined by the time difference, which can be determined by a measuring operation, of the time slot of the pulse frame recognition bit of the partial information arriving in the compensating store, in relation to the time slot of the pulse frame recognition bit in the switching network (K).

## Revendications

1. Montage pour des installations de télécommunications à multiplexage temporel, notamment pour des installations de téléphonic MIC, avec établissement de liaisons individuelles par l'intermédiaire respectivement d'un couple de canaux, dont les deux canaux individuelles sont utilisés pour la transmission d'informations pour cette liaison dans l'un et dans l'autre sens de transmission, et comportant des groupes de jonction (LTG) raccordés individuellement aux entrées (E, A) d'un champ de couplage (K) à plusieurs étages et dans lesquels les deux canaux, qui doivent être interconnectés directement par l'intermédiaire du champ de couplage (K) selon le principe du multiplexage temporel, et qui sont associés respectivement à une liaison, sont synchrones du point de vue de la cadence temporelle et des limites des trames d'impulsions, grâce à la mémorisation temporaire des informations devant être transmises dans chacun des deux sens de transmission, par le fait que les opérations d'enregistrement et les opérations de lecture dans les mémoires totales concernées de chacun de ces modules de jonction (LTG) sont amenées à coïncider en ce qui concerne la suite temporelle des différentes informations partielles et en ce qui concerne la position temporelle des limites des trames d'impulsions réunissant les informations partielles selon des cycles d'exploration, et dans lequel de tels ensembles de deux canaux interconnectés selon un multiplexage temporel et associés à une liaison considérée, sont soumis, dans leur cheminement selon lequel ils partent de l'un desdits groupes de jonction (LTG) et traversant le champ de couplage (K) pour aboutir au même groupe de jonction (LTG) ou à un autre de ces groupes de jonction (LTG) qui lui correspond et qui travaille d'une façon synchrone du point de vue de la cadence et des trames d'impulsions, à des retards qui concernent la position temporelle des différentes informations partielles et la position temporelle de chacune des limites des trames d'impulsions, et comportant des dispositifs de retardement (V2, G), au moyen desquels les canaux peuvent être interconnectés selon un multiplexage temporel et qui servent à réaliser un retard supplémentaire, grâce auquel les informations partielles, qui arrivent depuis le champ de couplage (K) par l'intermédiaire d'un canal faisant partie d'un couple de canaux associé à une liaison, dans lesdits modules de jonction (LTG), où les informations partielles correspondantes, qui doivent être transmises au champ de couplage, par l'intermédiaire de l'autre canal de ce couple de canaux, sont amenées à coïncider dans le temps du point de vue de leurs positions temporelles et des limites de leurs trames d'impulsions, afin de garantir le synchronisme indiqué, caractérisé par le fait que des multiples (Z2) servant au multiplexage de créneaux temporels, qui sont prévus dans le dernier étage de couplage, émettent les informations partielles reçues et mémorisées temporairement dans leur mémoire totale respective (V2), dans des trames d'impulsions dont les limites sont décalées dans le temps par rapport aux limites des trames d'impulsions des informations partielles reçues dans le multiple considéré (Z2) servant au multiplexage de crénaux temporels, d'un retard dont la durée est fixée d'une part en fonction de la différence entre les durées des trames d'impulsions et d'autre part en fonction de la somme de valeurs maximales possibles des retards qui sont conditionnées par les influences dues aux lignes (temps de transit dans les câbles) sur le trajet partant de la sortie (A) du champ de couplage et aboutissant aux groupes respectifs de jonction (LTG) et sur le trajet partant de ces groupes et aboutissant à l'entrée (E) concernée du champ de couplage, et par des influences, notamment par des influences perturbatrices, à l'intérieur de ces modules de jonction (LTG), et que des mémoires de compensation (G), qui sont associées aux entrées (E) du champ de couplage (K) et qui mémorisent temporairement les informations partielles, reçues par l'un desdits groupes de jonction (LTG), en ce qui concerne les trames d'impulsions y compris les limites de ces trames, émettent à nouveau ces informations partielles après un temps de mémorisation qui peut être adapté à la différence entre la valeur maximale et la valeur réelle des influences indiquées dues aux lignes et des influences indiquées à l'intérieur des modules de jonction concernés (LTG).

2. Montage suivant la revendication 1, caractérisé par le fait que dans les mémoires de compensation (G) il est prévu respectivement un registre à décalage (X), dans lequel les informations partielles ainsi que les bits d'identification de trames d'impulsions, pour chaque trame d'impulsions, sont enregistrés et sont lus à nouveau ultérieurement de façon correspondante, et que pour l'adaptation du temps de mémorisation de la manière indiquée, on mesure (au moyen de N) l'intervalle de temps entre la position temporelle du bit d'identification des trames d'impulsions dans les informations partielles, arrivant dans la mémoire de compensation (G) considérée, et la position temporelle du bit d'identification des trames d'impulsions dans le champ de couplage (K), et que les informations partielles, qui doivent être enregistrées dans la mémoire de compensation (G), ainsi que le bit d'identification de trames sont envoyés, conformément à cet intervalle de temps, à un élément (par exemple x3) du registre à décalage, tel qu'un nombre (n-3) d'éléments du registre à décalage, qui correspond au temps de mémorisation nécessaire, sont disposés en amont de l'élément (xn) du registre à décalage, qui sert à délivrer le contenu de ce registre.

3. Montage suivant la revendication 1, caractérisé par le fait que dans les mémoires de compensation (G) il est prévu respectivement une mémoire totale, dans laquelle un dispositif d'enregistrement travaille en avance par rapport à un dispositif de lecture, par le fait que l'opération de lecture devant être exécutée pour chacun des éléments de la mémoire totale intervient avec, par rapport à l'opération d'enregistrement correspondante, un retard correspondant à l'intervalle de temps, qui peut être déterminé par une opération de mesure, entre la position temporelle du bit d'identification des trames d'impulsions des informations partielles arrivant dans la mémoire de compensation et la position temporelle du bit d'identification des trames d'impulsions dans le champ de couplage (K).

0 057 758

13